# EUROPÄISCHE PATENTANMELDUNG

(11) **EP 2 273 849 A2**
(43) Veröffentlichungstag der Anmeldung: **12.01.2011**
(21) Anmeldenummer: 10167549.4
(22) Anmeldetag: 28.06.2010
(51) Int. Cl.: H05B 33/08

(54) **LED-Ansteuerung**

(30) Priorität: 09.07.2009 DE 102009032407; 22.10.2009 DE 102009050327; 26.01.2010 DE 102010005743
(71) Anmelder: Siteco Beleuchtungstechnik GmbH, 83301 Traunreut (DE)
(72) Erfinder: Klauck, Bernd, 83129, Hölsweg (DE); Hofinger, Christoph, 83236, Übersee (DE); Härtl, Michael, 83278, Traunstein (DE); Meyer, Clemens, 83278, Traunstein (DE)
(74) Vertreter: Schmidt, Steffen

(57) **Zusammenfassung**

Die Erfindung betrifft eine elektronische Schaltung zur Ansteuerung von LEDs, die Folgendes umfasst: eine Gleichrichterbrücke zum Erzeugen gleichgerichteter Netzhalbwellen, einen Sperrwandler, dessen Eingang mit den gleichgerichteten Netzhalbwellen versorgt wird, und eine Stromrückführung des Ausgangsstroms des Sperrwandlers über einen Shuntwiderstand.

## Beschreibung

Die Erfindung betrifft eine elektronische Ansteuerung für LEDs (lichtemittierende Dioden), worunter auch OLEDs (organic light emitting diodes) zu verstehen sind.

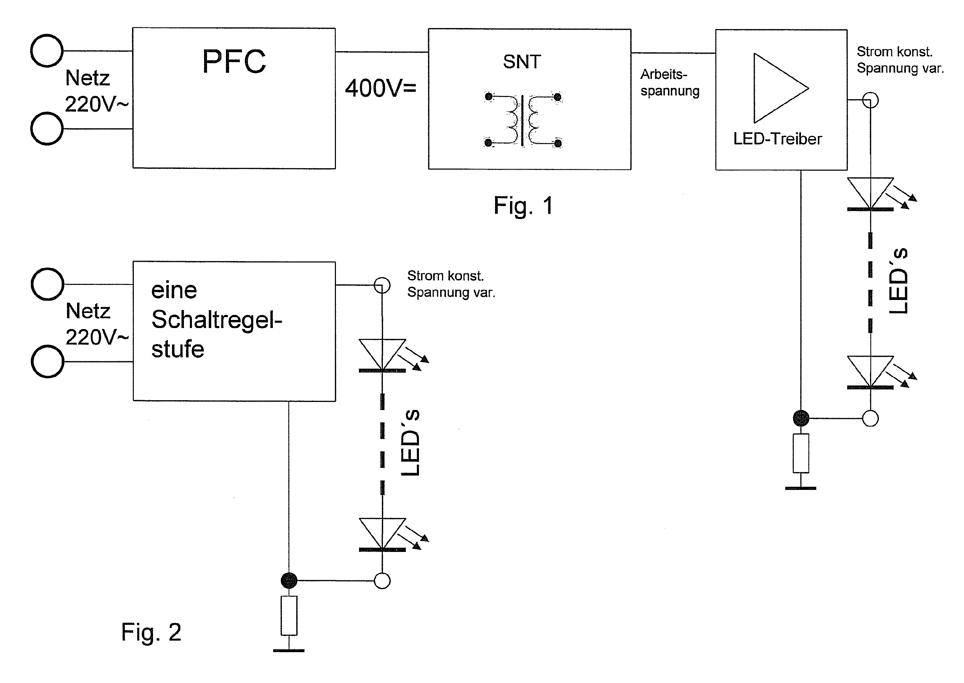

Für Leuchten (z.B. Innen- oder Außenleuchten), die mit LEDs als Leuchtmittel betrieben werden, wird eine elektronische Ansteuerung benötigt. Nach dem Stand der Technik umfasst eine solche elektronische Ansteuerung in der Regel drei Schaltregelstufen, wie sie beispielhaft in dem Blockdiagramm nach Figur 1 dargestellt sind. Eine (in der Regel aktive) Leistungsfaktorkorrektur (Englisch: power factor correction oder PFC) ist in der Regel vorgeschrieben, um sicherzustellen, dass das Netz nur mit einer ohmschen Last belastet wird. Der Ausgang des PFC umfasst eine geregelte Gleichspannung, die in einem Schaltnetzteil (SWT) auf eine Arbeitsspannung für die nachfolgende LED-Treiberstufe umgesetzt wird. Das Schaltnetzteil kann gleichzeitig für eine Potentialtrennung sorgen. Schließlich ist eine LED-Treiberstufe vorgesehen, welche einen konstanten Strom zur Versorgung von mehreren in Reihe geschalteten LEDs ausgibt.

Die Schaltungstechnik zur LED-Ansteuerung nach dem Stand der Technik ist verhältnismäßig aufwendig, weil drei separate Schaltregelstufen hintereinander vorgesehen sind. Die Aufgabe der vorliegenden Erfindung ist es, eine technisch einfache Lösung zur Ansteuerung von LED-Anwendungen in Leuchten bereitzustellen.

Die Lösung der vorliegenden Erfindung stellt eine elektronische Schaltung zur Verfügung, in welcher die Funktionen der Leistungsfaktorkorrektur (PFC), des Schaltnetzteils und der LED-Treiberstufe in einer einzigen getakteten Stufe ausgeführt werden.

Die elektronische Schaltung gemäß der vorliegenden Erfindung zur Ansteuerung von LEDs umfasst Folgendes: eine Gleichrichterbrücke zum Erzeugen gleichgerichteter Netzhalbwellen, einen Sperrwandler, dessen Eingang mit den gleichgerichteten Netzhalbwellen versorgt wird, und eine Stromrückführung des Ausgangsstrom des Sperrwandlers über einen Shuntwiderstand.

Der angewandte Sperrwandler ermöglicht es, die drei Schaltregelstufen, welche nach dem Stand der Technik für eine Ansteuerung der LEDs notwendig sind, in eine einzige Schaltstufe zu integrieren. Die Eingangsspannung des Sperrwandlers ist dabei keine Gleichspannung, sondern die gleichgerichteten Netzhalbwellen. Aufgrund des Regelalgorithmus, ein sogenannter Critical Conduction Mode, folgt der Spitzenwert des dreieckförmigen Schaltstroms der Wellenform der Eingangsspannung, wodurch der gemittelte Eingangsstrom und die Eingangsspannung in Phase sind, wie es für die geforderte Leistungsfaktorkorrektur erforderlich ist.

Nach einer bevorzugten Ausführungsform erfolgt die Stromrückführung über den Shuntwiderstand mit einer Zeitkonstante, die sich über mehrere Netzhalbwellen erstreckt.

Gemäß einer Ausführungsform ermöglicht es die elektronische Spannung, die LEDs zu dimmen. Dazu ist eine Referenzspannung für die Stromrückführung veränderbar. Durch die Veränderung der Referenzspannung für die Stromrückführung kann die Helligkeit der LEDs stufenlos gedimmt werden. Demgegenüber sieht eine herkömmliche Dimmung für LEDs eine Modulation der LED-Treiberstufe vor. Diese Art von Dimmung hat jedoch den Nachteil, dass die maximale Anzahl der Dimmstufen durch das Verhältnis zwischen Schaltfrequenz der LED-Treiberstufe und deren Modulationsfrequenz begrenzt ist. Die vorliegende Erfindung ermöglicht demgegenüber eine kontinuierliche Dimmung der LEDs.

Gemäß einer bevorzugten Ausführungsform wird die Referenzspannung zur Dimmung der LEDs über einen DA-Wandler durch einen Mikroprozessor in der Schaltung erzeugt. Mittels der Steuerung über den Mikroprozessor lassen sich eine Vielzahl von Funktionen zur Helligkeitsregulierung der LEDs in die Schaltung integrieren. Beispielsweise kann die Schaltung über eine Schnittstelle verfügen, an der Steuerleitungen zur Regelung der Leuchte angeschlossen werden. Das Signal der Steuerleitungen kann in dem Mikroprozessor verarbeitet werden und in eine entsprechende Referenzspannung für die Stromrückführung zum Dimmen der LEDs umgewandelt werden.

Gemäß einer weiteren Ausführungsform umfasst die Schaltung wenigstens einen Sensor, insbesondere einen Bewegungsmelder, einen Lichtsensor und/oder einen Temperatursensor oder Schnittstellen für solche Sensoren. Die Ausgangssignale der Sensoren können ebenfalls vorzugsweise von dem Mikroprozessor in eine Referenzspannung für die Stromrückführung umgewandelt werden, um die LEDs entsprechend den ausgegebenen Signalen der Sensoren zu steuern. Beispielsweise kann aufgrund des Signals aus dem Bewegungsmelder die Helligkeit der LEDs erhöht werden, wenn sich eine Person der Leuchte nähert. Über einen Lichtsensor kann ferner die Helligkeit der LEDs der Umgebungshelligkeit der Leuchte angepasst werden. Zum Beispiel wird die Leuchte bei Dämmerung eingeschaltet. Schließlich kann ein Temperatursensor ein Signal erzeugen, welches anzeigt, dass die Gefahr einer Überhitzung der LEDs droht. In diesem Fall wird die Steuerschaltung die LEDs dimmen oder ausschalten.

Nach einer Ausführungsform erfolgt die Dimmung der LEDs abhängig von einem Steuersignal, welches von außen an die elektronische Schaltung übermittelt wird. So lässt sich von einer zentralen Stelle, beispielsweise für Straßenbeleuchtungen, die Helligkeit der Leuchten zentral steuern. Gemäß einer alternativen Ausführungsform kann die Steuerung der LEDs auch über eine integrierte Uhr erfolgen. Beispielsweise kann abhängig von dem zentralen Steuersignal oder dem Signal der integrierten Uhr eine Nachtabsenkung der Helligkeit der LEDs bereitgestellt werden. Bei dieser Ausführungsform, wie sie insbesondere für Außenleuchten vorteilhaft eingesetzt wird, kann die Steuerelektronik für die Dimmung der LEDs so eingerichtet sein, dass sich die LEDs zu einer vorgegebenen Abendzeit einschalten und zu einer vorgegebenen Zeit am Morgen wieder ausschalten. Ferner kann über Nacht, wenn nur mit geringerer Verkehrsdichte auf einer Straße oder einen Gehweg zu rechnen ist, die Helligkeit der LEDs gedimmt werden.

Gemäß einer bevorzugten Ausführungsform sieht die Schaltung ferner eine Dimmung der LEDs zur Alterungskompensation und/oder zur Verschmutzungskompensation der LEDs vor. Der Wirkungsgrad einer LED verschlechtert sich im Laufe der Gesamtlebenszeit der LED. Um diesem Effekt entgegenzuwirken, kann eine Dimmung zur Alterungskompensation vorsehen, dass über die voraussichtlich zu erwartende Lebenszeit der LEDs der Versorgungsstrom allmählich erhöht wird, um trotz der Alterungserscheinungen der LEDs eine konstante Beleuchtungsstärke zu erzielen. Ferner kann die Schaltung zur Dimmung der LEDs für eine Verschmutzungskompensation eine Erhöhung der Helligkeit der LEDs über den Zeitraum zwischen den Reingungsintervallen der Leuchten vorsehen. Der Helligkeitsgrad der LEDs wird dabei entsprechend einer empirisch ermittelten Kurve nachgeregelt, welche einen mittleren Verschmutzungsgrad der Leuchten, wie er sich über den Zeitraum zwischen den Reinigungsintervallen einstellt, Rechnung trägt. Diese empirische Kurve kann auch jahreszeitbedingte Schwankungen, die sich in dem Verschmutzungsgrad der Leuchten niederschlägt, berücksichtigen.

Weitere technische Merkmale und Vorteile der vorliegenden Erfindung werden anhand der Beschreibung einer bevorzugten Ausführungsform anhand der beigefügten Figuren deutlich. In den Figuren ist Folgendes dargestellt:
- Figur 1: zeigt eine herkömmliche LED-Ansteuerung mit drei Schalterstufen.
- Figur 2: zeigt eine LED-Ansteuerung nach der vorliegenden Erfindung mit einer Schal- terstufe.
- Figur 3: zeigt ein Schaltbild einer elektronischen Schaltung zur LED-Ansteuerung gemäß einer Ausführungsform.
- Figur 4: zeigt die Eingangsspannung (große Halbwellen) und den Eingangsstrom (Spit- zen) eines Sperrwandlers in der elektronischen Schaltung nach einer Ausfüh- rungsform.

Wie eingangs erläutert, umfasst eine herkömmliche Ansteuerung für LEDs drei Schalterstufen, die, wie in Figur 1 dargestellt, einen Leistungsfaktorkorrektur (PFC) als erste Stufe umfasst, die eine Gleichspannung erzeugt. Ein Schaltnetzteil ändert die Gleichspannung (z.B. 400 V) in eine Arbeitsspannung für einen LED-Treiber, der die letzte Stufe der Schaltung bildet.

Gemäß der Ausführungsform der Erfindung sind die in Figur 1 dargestellten drei Schalterstufen in einer einzigen Schalterstufe zusammengefasst, wobei die Funktionalität erhalten bleibt. oder noch verbessert ist. Der Eingang der Schalterstufe ist z.B. eine Netzversorgung von 220 V Wechselstrom.

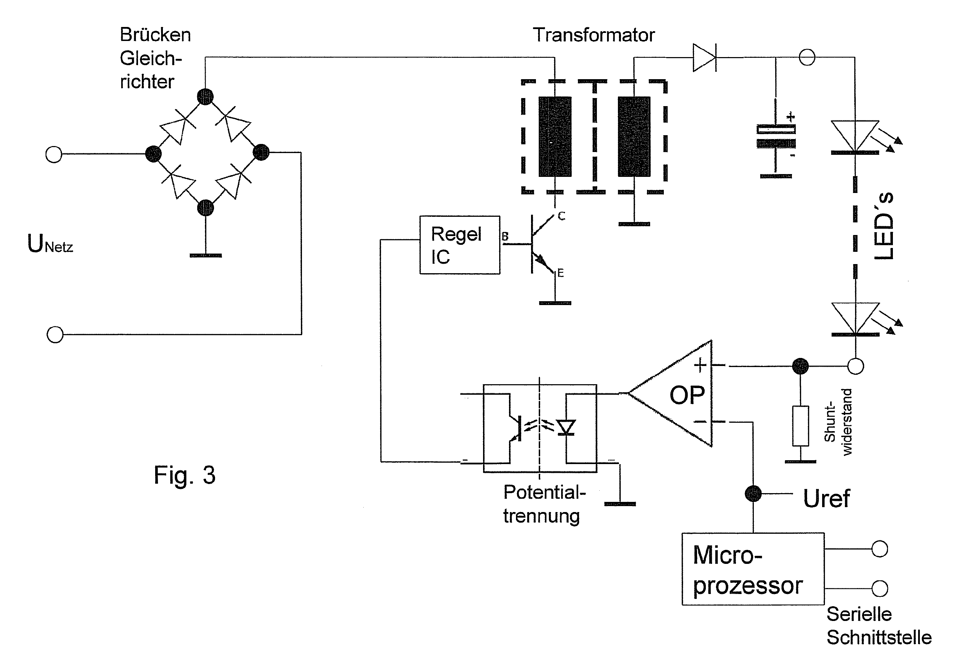

Die Integration der drei Schalterstufen in eine Schalterstufe ist in Figur 3 beispielhaft dargestellt.

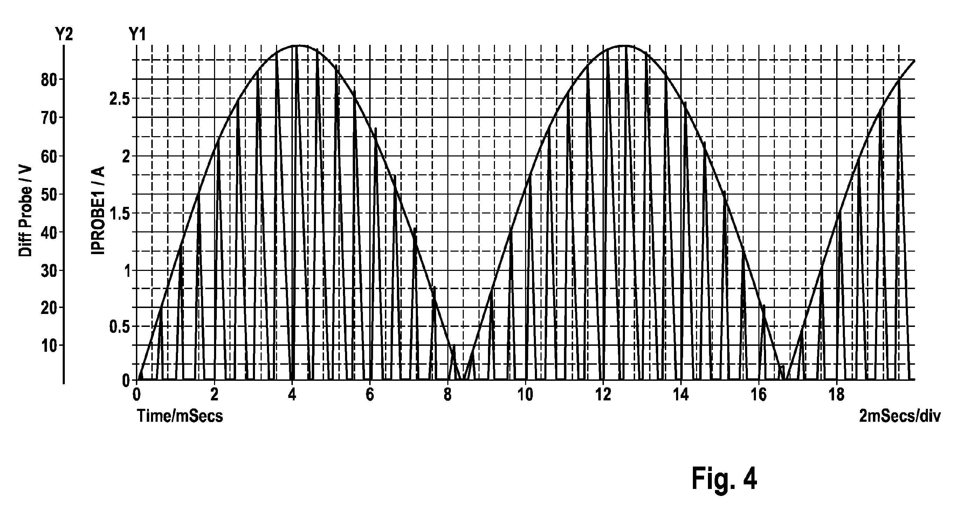

Die Schaltung umfasst eine Gleichrichterbrücke, die am Eingang mit einer Wechselspannung betrieben wird. Die Gleichrichterbrücke erzeugt gleichgerichtete Netzhalbwellen, welche nachfolgend einen Sperrwandler versorgen. Der Sperrwandler wird demnach nicht, wie sonst in dem Stand der Technik üblich, mit einer Gleichspannung betrieben, sondern nur mit gleichgerichteten Netzhalbwellen. Aufgrund des Regelmechanismus folgt der Spitzenwert des dreieckförmigen Schalterstroms des Sperrwandlers einer Wellenform, wie sie in Figur 4 dargestellt ist. Der gemittelte Eingangsstrom und die Eingangsspannung sind in Phase, wie es für die Leistungsfaktorkorrektur erforderlich ist.

Die Regelung des Ausgangsstroms erfolgt über die Rückführung mittels eines Shuntwiderstandes mit einer Zeitkonstante, die sich wenigstens über zwei oder mehr Netzhalbwellen erstreckt. Die Stromregelung erfolgt dabei über das Tastverhältnis. Innerhalb einer Halbwelle ist das Tastverhältnis konstant oder quasi konstant (maximale Abweichung z.B. ±5 %).

Die Referenzspannung für die Stromrückführung über einen Shuntwiderstand kann verändert werden, wodurch sich die Stärke des sonst konstanten Ausgangsstroms ändert. Die Veränderung der Referenzspannung kann somit zur stufenlosen Dimmung der LEDs verwendet werden.

Ein Mikroprozessor in der Schaltung kann die Veränderung der Referenzspannung bewirken. Die Steuerung kann über eine serielle Schnittstelle über externe Steuersignale erfolgen (DALI, Powerline, DMX usw.). Ferner kann ein Sensoranschluss für Bewegungsmelder, Lichtsensoren oder Temperatursensoren vorgesehen sein. Diese können mittels einer programmierten Schaltung z.B. über den Mikroprozessor für eine Nachtabsenkung, eine Alterungskompensation der LEDs oder eine Verschmutzungskompensation der Leuchte sorgen.

## Patentansprüche

1. Elektronische Schaltung zur Ansteuerung von LEDs, die Folgendes umfasst:
eine Gleichrichterbrücke zum Erzeugen gleichgerichteter Netzhalbwellen, einen Sperrwandler, dessen Eingang mit den gleichgerichteten Netzhalbwellen versorgt wird, und eine Stromrückführung des Ausgangsstroms des Sperrwandlers über einen Shuntwiderstand.

2. Elektronische Schaltung nach Anspruch 1, wobei die Stromrückführung über den Shuntwiderstand mit einer Zeitkonstante über mehrere Netzhalbwellen erfolgt.

3. Elektronische Schaltung nach einem der vorhergehenden Ansprüche, wobei eine Referenzspannung für die Stromrückführung veränderbar ist, um die LEDs zu dimmen.

4. Elektronische Schaltung nach Anspruch 3, wobei die Referenzspannung über einen DA-Wandler durch einen Mikroprozessor in der Schaltung erzeugt wird.

5. Elektronische Schaltung nach einem der vorhergehenden Ansprüche, die weiterhin eine Schnittstelle zum Anschluss einer Steuerleitung zur Regelung der LEDs umfasst.

6. Elektronische Schaltung nach einem der vorhergehenden Ansprüche, wobei die Schaltung über Anschlüsse für wenigstens einen Sensor verfügt, insbesondere für einen Bewegungsmelder, einen Lichtsensor und/oder einen Temperatursensor.

7. Elektronische Schaltung nach einem der vorhergehenden Ansprüche, wobei die Schaltung eine Regelung zum Dimmen der LEDs abhängig von einem Steuersignal und/oder abhängig von einem Signal einer integrierten Uhr umfasst.

8. Elektronische Schaltung nach einem der vorhergehenden Ansprüche, wobei die Schaltung eine Regelung zum Dimmen der LEDs für eine Alterungskompensation und/oder eine Verschmutzungskompensation umfasst.
